# EUROPEAN PATENT SPECIFICATION

(11) **EP 0 801 894 B1**
(45) Date of publication and mention of the grant of the patent: **26.06.2002**
(21) Application number: 97202005.1
(22) Date of filing: 26.04.1994
(51) Int. Cl.: A01K 1/12

(54) **A construction for automatically milking animals**
Gerät zum automatischen Melken von Tieren
Dispositif de traite automatique d'animaux

(30) Priority: 29.04.1993 NL 9300730
(43) Date of publication of application: 22.10.1997
(62) Divisional of application: 94201169.3
(73) Proprietor: MAASLAND N.V., 3155 PD Maasland (NL)
(72) Inventor: van der Lely, Cornelis, 6300 ZUG (CH)
(74) Representative: Corten, Maurice Jean F.M.

(56) References cited:
- FR-A- 2 598 236
- GB-A- 1 158 016
- US-A- 4 445 460

## Description

The present invention relates to a construction for automatically milking animals, such as cows, provided with a milkbox having a milking robot and an area where the animals are allowed to move freely. Consequently, the construction may comprise a cowshed and/or a pasture or a pasture only. In the latter case the milkbox might be transportable in the field.

The construction according to the invention is characterized in that it comprises a pasture with a rotational grazing system, wherein the animals are prevented from entering a particular pasture and are allowed to visit another pasture through a one-way passageway. In this manner it is possible to achieve a one-way walk-through system in which the milkbox and a limited number of pastures, two for example, are included. Such a rotational grazing system offers the advantage that the animals can change from one pasture to another and, consequently, can always take in fresh grass, which improves the milk yield.

An embodiment of the invention also relates to a construction comprising one or more pastures with one or more fences by means of electrified wires or cables.

To enable the animals to walk also at night easily through the successive pastures in one direction, the animals should be able to find the passageway from one pasture to a next one without any difficulty. Accordingly, in a further embodiment there are provided one or more by lamps illuminated passageways.

Furthermore, the farm buildings are arranged about centrally in the construction, with the construction being provided with fences having one-way passageways. Such an arrangement facilitates the construction of a rotational grazing system; the pastures included in the one-way walk-through system can now always be grouped around the farm buildings where the milkbox can be placed.

Hereinafter, the invention will be further explained with reference to the accompanying drawings, in which:
Figure 1 represents a pasture area divided into a plurality of pasture fields constituting a one-way pass-through system, while there is provided a cowshed with a milkbox and a passageway where feed can be supplied, if desired;
Figure 2 shows a rotational grazing system where the one-way pass-through system each time comprises two pastures provided with a passageway in between them where feed can be supplied, if desired;
Figure 3 is a plan view of a passageway between two pastures;
Figure 4 is a side view of this passageway;
Figure 5 is a rear view of the passageway shown in Figures 3 and 4, and
Figure 6 shows a rear view of an embodiment of folding doors that open in one direction.

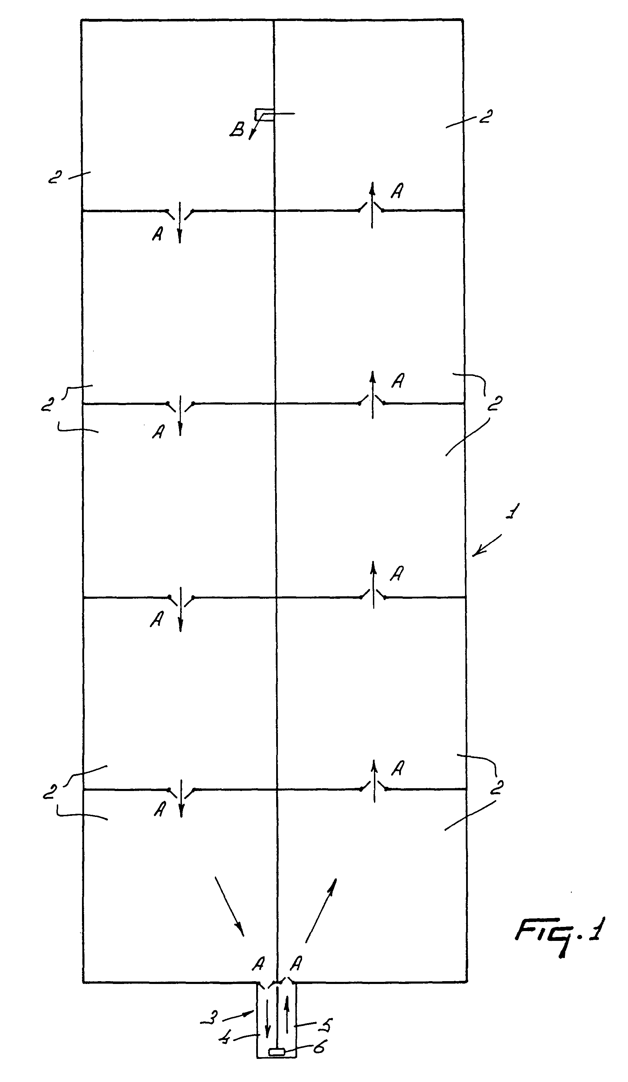

In Figure 1, a pasture area 1 divided into ten separate pastures 2 is indicated. Furthermore, there is shown a cowshed 3 which is divided into halves 4 and 5 which interconnect through a milkbox 6. The milkbox 6 is equipped with a milking robot for automatic connection of teat cups to the teats of animals to be milked. In the milkbox 6 or in its vicinity there are disposed means required for the automatic implementation of milking process. The pastures 2 interconnect through doors, gates or similar devices which open in one direction, and in such a manner that the animals can go from one pasture to another one through a door, gate or a similar means, with all ten of the pastures 2 being walked through successively, without the animals being permitted to return to a pasture where they had been immediately before. In other words, by dividing the pasture area 1 into separate pastures 2 and by making use of doors folding open in one direction, a path and direction of travel for the animals through the entire construction is obtained. From the last pasture walked through, the animals enter the cowshed half 4 through doors which open in one direction; from there the animals can enter the milkbox 6 in order to be milked, whereas after the animals have been milked, they arrive from the milkbox 6 at the cowshed half 5 and subsequently, through folding doors opening unidirectionally, at the first one of the pastures 2 to be walked through again. The path and direction of travel by the animals through the construction therefore comprise not only the individual pastures 2, but also the cowshed halves 4, 5 and the milkbox 6. The folding doors opening unidirectionally are indicated by A in Figure 1, whereas the path and direction of walking through the construction are indicated by arrows. In Figure 1, a passageway B is indicated as connection between the pastures situated most remotely from the cowshed 3. This passageway B is of a nature different from that of the folding doors A opening unidirectionally, since the passageway B comprises a feeding device in addition to such a set of folding doors opening unidirectionally. By giving the animals feed, preferably concentrate, at the furthest place from the cowshed 3, the animals are stimulated to walk from the cowshed all over the pasture area 1.

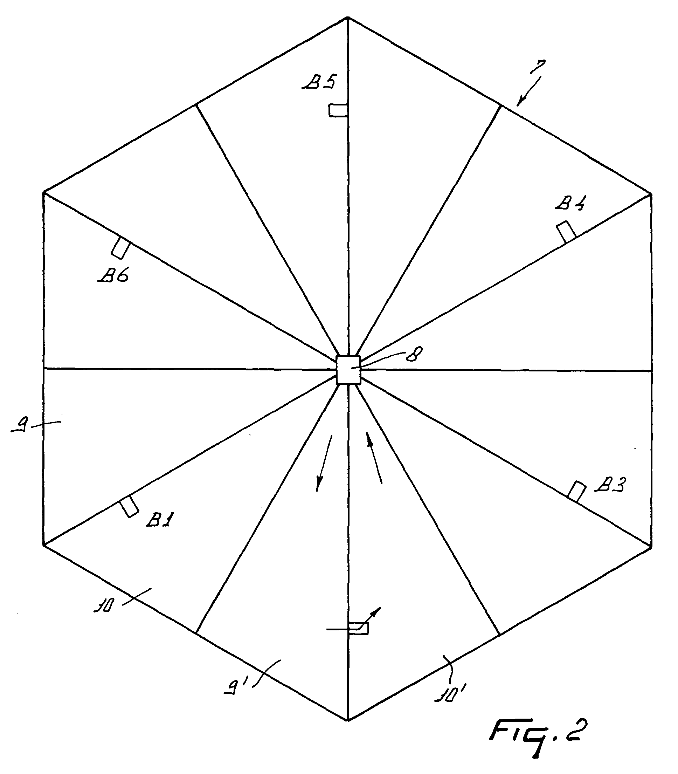

Figure 2 shows a different division of a pasture area 7, where the farm buildings 8 are situated in the centre and a rotation grazing system is adopted. For this purpose, the pasture area 7 around the farm buildings 8 is divided into separate pastures, viz. twelve in the present case. A one-way walk-through system for the animals is now constituted by two pastures 9 and 10, a one-way passageway B1 from the pasture 9 to pasture 10 and also the cowshed belonging to the farm buildings 8 with the milkbox provided therein. When the pastures 9 and 10 have insufficient grass for the animals, the animals are directed to a next pair of pastures 9' and 10', with a one-way walk-through system being constituted by the pasture 9', one one-way passageway B2 from pasture 9' to the pasture 10', the pasture 10' itself and again the cowshed with milkbox through which the pasture 9' is again reached. In the present embodiment, the animals arrive again at the first two pastures 9 and 10 after six periods of time, each comprising a certain number of days. In other words, the one-way walk-through system revolves about the farm buildings 8. Owing to the animals having the opportunity of regularly changing pasture fields, they can constantly take in fresh grass, which will add to the milk yield.

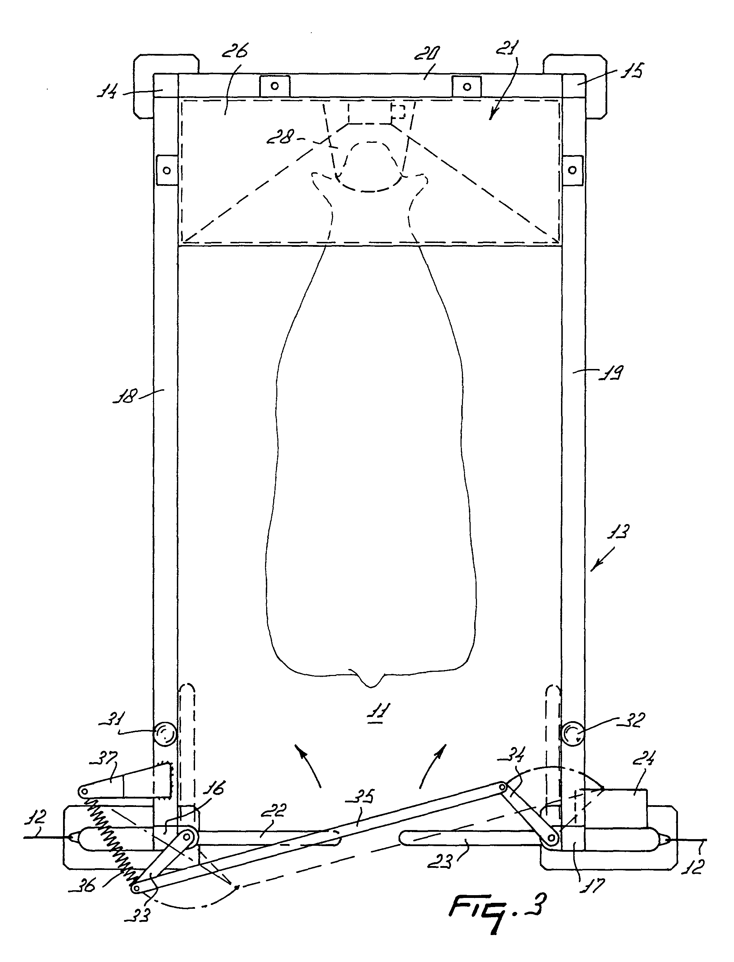

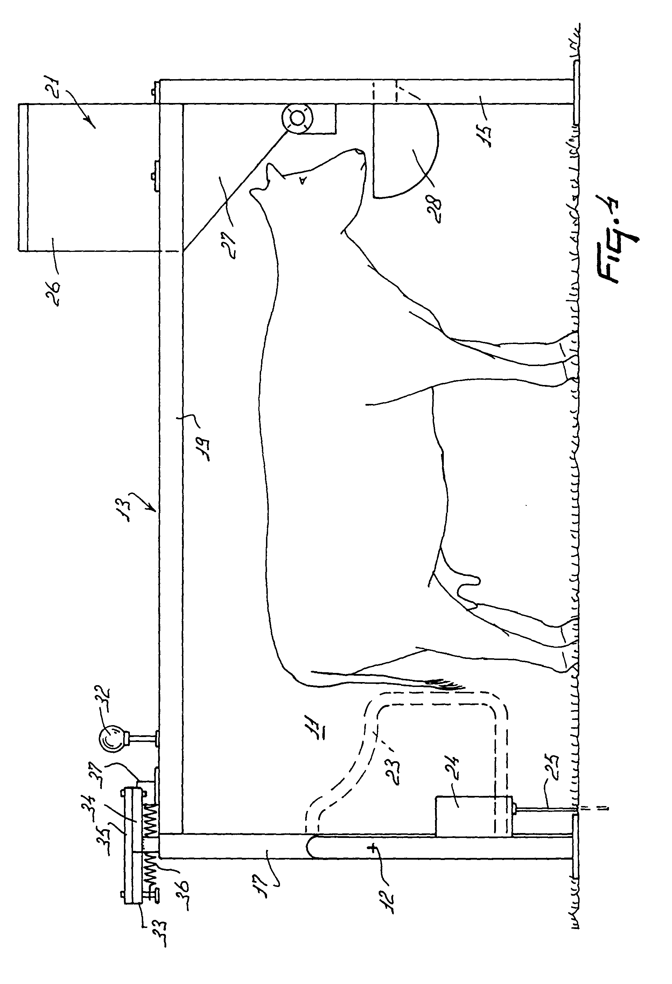

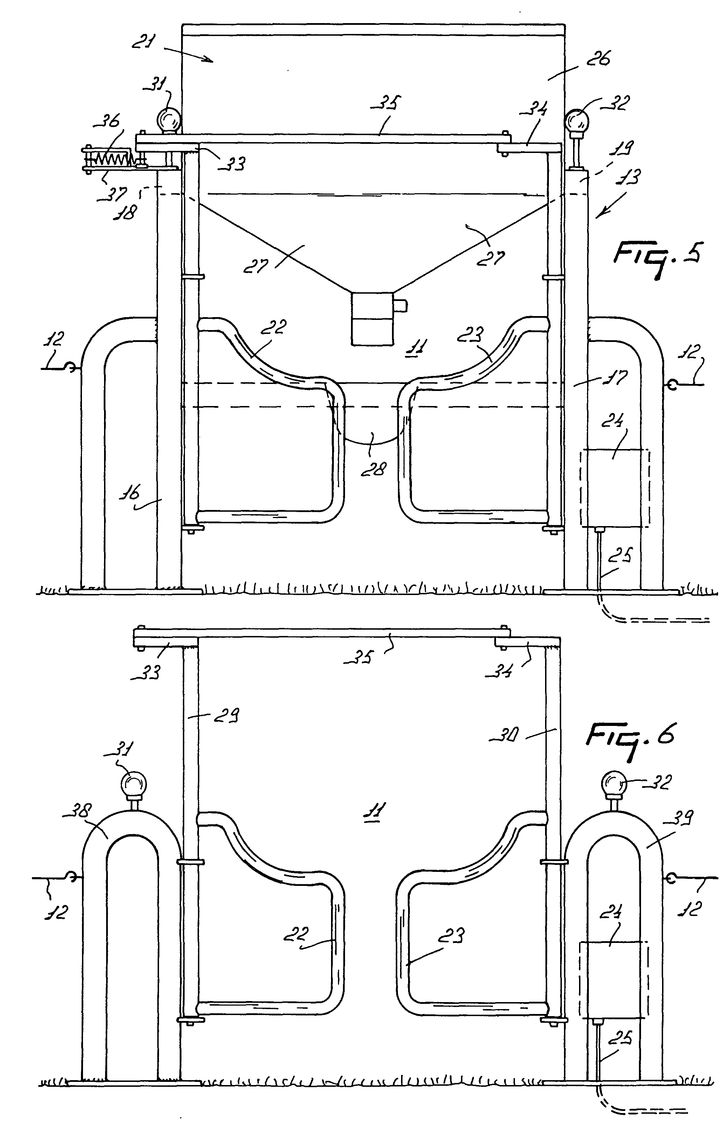

Figures 3, 4 and 5 show a passageway 11 in an electric wire fence 12, which passageway is designed such that feed, especially concentrate, can be administered locally to the animals. Of course, all kinds of other fences, railings, palings or similar enclosures instead of electric wire fences can be used for delimitation of individual pastures. The passageway 11 in the fence 12 is made up of a frame 13 whose front vertical frame beams 14 and 15, rear vertical frame beams 16 and 17 and horizontal frame beams 18, 19 and 20 constitute a box which is fully open on the side, is provided with an automatic feeding device 21 on the front side, and is provided with folding doors 22, 23 opening unidirectionally on the rear side. Beside one of the rear vertical frame beams, frame beam 17 in Figures 3 - 5, there is provided a current distribution cabinet 24 of which the incoming cable 25 runs underground from a farm building to the distribution cabinet 24, while the distribution cabinet 24 comprises the electrical units required for applying the appropriate current to the electric wire fence 12, for operating the automatic feeding device 21, for enabling the passageway 11 to be illuminated, etc. For the purpose of the illumination, lamps 31 and 32 capable of illuminating the passageway 11 are fitted on the two horizontal frame beams 18 and 19. As the installation should be permanently working, with the animals being milked preferably three times in twenty-four hours, the animals should be able to walk all over the pasture area in the dark, too. Accordingly, it is advantageous to have an indication provided by means of lamps 31, 32 as to where the passageway 11 in the two pastures situated furthest from the cowshed is located. The feeding device for the automatic administration of feed to the animals which have passed the folding doors 22, 23 opening unidirectionally, and therefore have passed the passageway 11, comprises a feed container 26 installed on top of the horizontal frame beams 18 and 19, while under the feed container 26 there is provided a hopper 27 for dropping in a controlled way the feed flowing from the feed container 26 into a feed trough 28, out of which the animals can eat.

The folding doors 22 and 23 opening unidirectionally are disposed at a certain distance from the ground surface and, furthermore, they slope down from the pivoting sides towards the centre. The doors 22 and 23 are hingedly connected to the rear vertical frame beams 16 and 17, respectively, by means of upwardly extending bearing members 29 and 30. A horizontal arm 33 extending rearwards and outwards is fixedly connected to the top side of the bearing member 29. A horizontal arm 34 extending forwards and inwards is fixedly connected to the top side of the bearing member 30. The ends of the arms 33 and 34 are hingedly interconnected by means of a tie-rod 35. The two arms 33 and 34 as well as the tie-rod 35 are mounted such that, in case one of the doors 22 and 23 is opened in the walk-through direction, the other door is simultaneously opened in the same direction, whereas the doors can only to a very small extent or not at all be opened against the walk-through direction.

As the doors slope down from the pivoting sides towards the centre, an animal which desires to go through the passageway 11 will tend to pass it as centrally as possible, with the doors being opened by the animal's body. For this purpose, the height of the doors at the centre is lower than that of the animal's head. However, if the animal should push mainly against one of the doors, yet both doors are opened by the construction comprising the arms 33 and 34 and the tie-rod 35, so that the animal can easily walk through the passageway 11. When the animal has passed the passageway, the door should be closed. To this end, the doors 22, 23 operationally open against the action of a spring 36. The doors are opened by the body of the animal and they remain pushing against the animal's body by the action of the spring 36 as long as the animal has not fully passed the doorway, while the doors close again by the action of the spring 36 when the animal has fully passed the doorway. The spring 36 provided in the present embodiment is therefore disposed between the end of one of the arms, viz. arm 33, and one supporting member 37 which is fixedly connected to the horizontal frame beam 18. Instead of a system where the doors are pushed open in one direction by the body of the animal and is closed by the action of a spring, it is feasible to utilize an electrically operated system designed such that the doors automatically open when an animal desiring to go through the passageway has come close to the doors, whereas they automatically close when the animal has fully passed the doorway. The distance between the automatic feeding device 21 and the doors 22 and 23 should be such that to the hind side of the animal there is a space sufficient to enable the doors 22 and 23 to be shut when the animal puts her head into the feed trough. The passageway 11 can also be provided with a counting device to count the number of animals that has gone through the passageway. In this way it is feasible to monitor the number of animals which have gone through the passageway. Such a counting device can also be fitted on the doors opening in one direction between the respective pasture fields into which the entire pasture area has been divided, as well as on the doors opening in one direction between the respective pastures and the cowshed. By this method it is made practicable to check the entire circulation process of the herd and, if necessary, to regulate it, for example, to prevent that all animals of the herd would have walked through the distinct pastures in too short a time and would be waiting at the milkbox.

Figure 6 shows an embodiment of doors opening in one direction, in which no automatic feeding device is included. Therefore, this construction can be used for not only the passageways B in Figures 1 and 2, but also the passageways A of Figure 1. The frame of the passageway 11 is now merely made up of the beams 38 and 39, to which the doors 22 and 23 are hingedly connected by means of the bearing members 29 and 30. The doors 22 and 23 are again coupled to each other by arms 33 and 34 and a tie-rod 35 in the same way as in the embodiment of Figures 3 to 5.

Under certain circumstances it may be important that an animal can be kept in the direct surroundings of the milkbox. For example, there may be elapsed much time since the last milking; as the animal should go to the milkbox again within a relatively short time period, it cannot be allowed to go too far from the milkbox, e.g. to go into the pasture. Also for other reasons it may be desirable that an animal is retained in the direct surroundings of the milkbox, e.g. during the night when the next morning the animal must be treated someway by the veterinary surgeon, for insemination, etc. The limited space where the animal may be retained and wherein the milkbox is situated can be constituted by the cowshed 3 itself or by a part of the cowshed, optionally combined with a limited pasture area. In a computer can be stored the conditions under which an animal must be retained in this limited space. When e.g. this limited space is constituted by the cowshed 3, the door which allows an animal to enter a pasture is, based upon these conditions, controlled by the computer. Of course, the animals must be free to enter the limited space and to go to the milkbox.

The invention is not limited to the embodiments rendered and set forth hereinbefore, but it also relates to all kinds of modifications, of course being within the scope of the accompanying claims.

## Claims

1. A construction for automatically milking animals, such as cows, provided with a milkbox (6) having a milking robot and an area (9, 10) where the animals are allowed to move freely, **characterized in that** the construction comprises a pasture with a rotational grazing system, wherein the animals are prevented from entering a particular pasture (9', 10') and are allowed to visit another pasture through a one-way passageway (B).

2. A construction according to claim 1, **characterized in that** the construction comprises at least one fence provided with a passageway (B) and a feeding device for feeding cows.

3. A construction according to any one of the preceding claims, **characterized in that** it comprises one or more pasture fields (9, 10) with one or more fences by means of electrified wires or cables.

4. A construction according to any one of the preceding claims, **characterized in that** the construction comprises one or more by lamps (31, 32) illuminated passageways (B).

5. A construction according to any one of the preceding claims, **characterized in that** the farm buildings (8) are arranged about centrally in the construction, with the construction being provided with fences having one-way passageways (B).

6. A construction according to any one of the preceding claims, **characterized in that** the construction comprises at least one fence (12) provided with a passageway (11) equipped with two doors (22, 23) to be opened in one direction.

7. A construction according to claim 6, **characterized in that** the doors (22, 23) open in one direction and slope down from the pivoting sides towards the centre.

8. A construction according to claim 6 or 7, **characterized in that** the doors (22, 23) are mounted at a certain distance from the ground.

9. A construction according to any one of the claims 6 - 8, **characterized in that** the doors (22, 23) are interconnected in such a way that in case one of the doors (22, 23) opens, the other one is opened simultaneously.

10. A construction according to any one of the claims 6 - 9, **characterized in that** the doors (22, 23) close by spring action.

11. A construction according to any one of the preceding claims, **characterized in that** the passageway (11) is provided in a fence, such as a wire fence, or similar construction.

12. A construction according to claim 11, **characterized in that** there is provided a current distribution box (24) of which the incoming cable (25) runs underground.

13. A construction according to claim 11 or 12, **characterized in that** the passageway (11) comprises a feeding device (21) for feeding the animals.

14. A construction according to any one of the claims 11 - 13, **characterized in that** the passageway (11) is capable of being closed at the farm buildings.

15. A construction according to any one of claims 11 - 14, **characterized in that** the passageway (11) opens automatically when an animal approaches this passageway.

16. A construction according to any one of claims 11 - 15, **characterized in that** the passageway is provided with a counting device to count the number of animals that has gone through the passageway.

17. A construction according to any one of the preceding claims, **characterized in that** the milkbox is transportable.

18. A construction according to claim 17, **characterized in that** animals are allowed to visit two pastures (9, 10) when they follow the one-way system.

19. A construction according to claim 17 or 18, **characterized in that** the animals are supplied with concentrated food.

20. A construction according to claim 19, **characterized in that** the animals are automatically supplied with concentrated food during milking.

## Patentansprüche

1. Vorrichtung zum automatischen Melken von Tieren, wie z. B. Kühen, mit einer Melkbox (6), die einen Melkroboter und einen Bereich (9, 10) aufweist, in dem sich die Tiere frei bewegen können,
**dadurch gekennzeichnet, daß** die Vorrichtung eine Weide mit einem Rotationsweidesystem umfaßt, bei dem die Tiere daran gehindert werden, eine bestimmte Weide (9', 10') zu betreten, und ihnen erlaubt wird, eine andere Weide über einen Einwegdurchgang (B) zu betreten.

2. Vorrichtung nach Anspruch 1,
**dadurch gekennzeichnet, daß** die Vorrichtung mindestens einen Zaun umfaßt, der mit einem Durchgang (B) und einer Fütterungsvorrichtung zum Füttern von Kühen versehen ist.

3. Vorrichtung nach einem der vorhergehenden Ansprüche,
**dadurch gekennzeichnet, daß** die Vorrichtung eine oder mehrere Weideflächen (9, 10) mit einem oder mehreren Zäunen aus elektrischen Leitungen oder Kabeln umfaßt.

4. Vorrichtung nach einem der vorhergehenden Ansprüche,
**dadurch gekennzeichnet, daß** die Vorrichtung einen oder mehrere durch Lampen (31, 32) beleuchtete Durchgänge (B) umfaßt.

5. Vorrichtung nach einem der vorhergehenden Ansprüche,
**dadurch gekennzeichnet, daß** die Wirtschaftsgebäude (8) etwa mittig in der Vorrichtung angeordnet sind, wobei die Vorrichtung Zäune mit Einwegdurchgängen (B) aufweist.

6. Vorrichtung nach einem der vorhergehenden Ansprüche,
**dadurch gekennzeichnet, daß** die Vorrichtung mindestens einen Zaun (12) umfaßt, der einen Durchgang (11) mit zwei in einer Richtung zu öffnenden Türen (22, 23) aufweist.

7. Vorrichtung nach Anspruch 6,
**dadurch gekennzeichnet, daß** sich die Türen (22, 23) in einer Richtung öffnen und von den Schwenkseiten zur Mitte abfallen.

8. Vorrichtung nach Anspruch 6 oder 7,
**dadurch gekennzeichnet, daß** die Türen (22, 23) in einem bestimmten Abstand vom Boden angeordnet sind.

9. Vorrichtung nach einem der Ansprüche 6 bis 8,
**dadurch gekennzeichnet, daß** die Türen (22, 23) derart miteinander verbunden sind, daß beim öffnen einer der Türen (22, 23) die andere gleichzeitig geöffnet wird.

10. Vorrichtung nach einem der Ansprüche 6 bis 9,
**dadurch gekennzeichnet, daß** die Türen (22, 23) durch Federkraft schließen.

11. Vorrichtung nach einem der vorhergehenden Ansprüche,
**dadurch gekennzeichnet, daß** der Durchgang (11) in einem Zaun, wie z. B. einem Drahtzaun, oder einer ähnlichen Konstruktion ausgebildet ist.

12. Vorrichtung nach Anspruch 11,
**dadurch gekennzeichnet, daß** ein Stromverteilerkasten (24) vorhanden ist, dessen Eingangsleitung (25) unterirdisch verlegt ist.

13. Vorrichtung nach Anspruch 11 oder 12,
**dadurch gekennzeichnet, daß** der Durchgang (11) eine Fütterungsvorrichtung (21) zum Füttern der Tiere umfaßt.

14. Vorrichtung nach einem der Ansprüche 11 bis 13,
**dadurch gekennzeichnet, daß** der Durchgang (11) in den Wirtschaftsgebäuden zu verschließen ist.

15. Vorrichtung nach einem der Ansprüche 11 bis 14,
**dadurch gekennzeichnet, daß** sich der Durchgang (11) automatisch öffnet, wenn sich ein Tier diesem Durchgang nähert.

16. Vorrichtung nach einem der Ansprüche 11 bis 15,
**dadurch gekennzeichnet, daß** der Durchgang eine Zählvorrichtung zum Zählen der Anzahl von Tieren aufweist, die den Durchgang passiert hat.

17. Vorrichtung nach einem der vorhergehenden Ansprüche,
**dadurch gekennzeichnet, daß** die Melkbox transportabel ist.

18. Vorrichtung nach Anspruch 17,
**dadurch gekennzeichnet, daß** die Tiere zwei Weiden (9, 10) aufsuchen können, wenn sie dem Einwegsystem folgen.

19. Vorrichtung nach Anspruch 17 oder 18,
**dadurch gekennzeichnet, daß** die Tiere mit Kraftfutter versorgt werden.

20. Vorrichtung nach Anspruch 19,
**dadurch gekennzeichnet, daß** die Tiere während des Melkens automatisch mit Kraftfutter versorgt werden.

## Revendications

1. Structure pour traire automatiquement des animaux, tels que des vaches, équipée d'un box de traite (6) ayant un robot de traite et une zone (9, 10) dans laquelle les animaux peuvent se déplacer librement, **caractérisée en ce que** la structure comprend un pâturage avec un système de pâture par rotation, dans laquelle les animaux ne peuvent pas entrer dans un pâturage particulier (9', 10') et peuvent visiter un autre pâturage à travers un passage à sens unique (B).

2. Structure selon la revendication 1, **caractérisée en ce que** la structure comprend au moins une clôture munie d'un passage (B) et d'un dispositif d'alimentation pour nourrir les vaches.

3. Structure selon l'une quelconque des revendications précédentes, **caractérisée en ce qu'**elle comprend un ou plusieurs champ(s) de pâturage (9, 10) avec une ou plusieurs clôture(s) constituées de fils ou de câbles électriques.

4. Structure selon l'une quelconque des revendications précédentes, **caractérisée en ce que** la structure comprend un ou plusieurs passage(s) (B) illuminé(s) par des lampes (31, 32).

5. Structure selon l'une quelconque des revendications précédentes, **caractérisée en ce que** les bâtiments de la ferme (8) sont disposés d'une manière à peu près centrale par rapport à la structure, la structure étant équipée de clôtures ayant des passages à sens uniques (B).

6. Structure selon l'une quelconque des revendications précédentes, **caractérisée en ce que** la structure comprend au moins une clôture (12) munie d'un passage (11) équipé de deux portes (22, 23) s'ouvrant dans une direction.

7. Structure selon la revendication 6, **caractérisée en ce que** les portes (22, 23) s'ouvrent dans une direction et s'inclinent vers le bas à partir des côtés de rotation vers le centre.

8. Structure selon la revendication 6 ou 7, **caractérisée en ce que** les portes (22, 23) sont montées à une certaine distance du sol.

9. Structure selon l'une quelconque des revendications 6 à 8, **caractérisée en ce que** les portes (22, 23) sont reliées entre elles de telle sorte que, si une des portes (22, 23) s'ouvre, l'autre est ouverte de manière simultanée.

10. Structure selon l'une quelconque des revendications 6 à 9, **caractérisée en ce que** les portes (22, 23) se ferment par l'action d'un ressort.

11. Structure selon l'une quelconque des revendications précédentes, **caractérisée en ce que** le passage (11) est muni d'une clôture, telle qu'une clôture de fil électrique, ou d'une structure similaire.

12. Structure selon la revendication 11, **caractérisée en ce qu'**il est prévu une boîte de distribution de courant (24) dont le câble d'entrée (25) s'étend sous-terre.

13. Structure selon la revendication 11 ou 12, **caractérisée en ce que** le passage (11) comprend un dispositif d'alimentation (21) pour nourrir les animaux.

14. Structure selon l'une quelconque des revendications 11 à 13, **caractérisée en ce que** le passage (11) est capable d'être fermé au niveau des bâtiments de la ferme.

15. Structure selon l'une quelconque des revendications 11 à 14, **caractérisée en ce que** le passage (11) s'ouvre automatiquement lorsqu'un animal s'approche de ce passage.

16. Structure selon l'une quelconque des revendications 11 à 15, **caractérisée en ce que** le passage est muni d'un dispositif de comptage afin de compter le nombre d'animaux qui sont passés à travers le passage.

17. Structure selon l'une quelconque des revendications précédentes, **caractérisée en ce que** le box de traite peut être transporté.

18. Structure selon la revendication 17, **caractérisée en ce que** les animaux peuvent visiter deux pâturages (9, 10) lorsqu'ils suivent le système à sens unique.

19. Structure selon la revendication 17 ou 18, **caractérisée en ce qu'**on fournit de la nourriture concentrée aux animaux.

20. Structure selon la revendication 19, **caractérisée en ce qu'**on fournit de la nourriture concentrée aux animaux de manière automatique pendant la traite.
